# EUROPÄISCHE PATENTSCHRIFT

(11) **EP 1 762 381 B1**
(45) Veröffentlichungstag und Bekanntmachung des Hinweises auf die Patenterteilung: **16.03.2011**
(21) Anmeldenummer: 06405303.6
(22) Anmeldetag: 13.07.2006
(51) Int. Cl.: B32B 37/12, B32B 37/15

(54) **Verfahren zur Herstellung eines Laminates**
Process for producing a laminate
Méthode de fabrication d'un laminé

(30) Priorität: 07.09.2005 EP 05405524
(43) Veröffentlichungstag der Anmeldung: 14.03.2007
(73) Patentinhaber: Amcor Flexibles Kreuzlingen Ltd., 8280 Kreuzlingen (CH)
(72) Erfinder: Nägeli, Hans R., 8212 Neuhausen am Rheinfall (CH)
(74) Vertreter: Burkhart, Hans

(56) Entgegenhaltungen:
- DE-A1-102004 007 927
- US-A- 5 565 252
- US-A1- 2001 003 624
- US-B1- 6 821 373

## Beschreibung

Die Erfindung betrifft ein Verfahren zur Herstellung eines Laminates nach dem Oberbegriff des Anspruchs 1.

Die heutige Kaschiertechnologie bei der Verpackungsherstellung basiert auf mittels Rollenbeschichtung aufgebrachten Einzelschichten. Beim Verkleben verschiedener Materialien, wie beispielsweise Aluminium und Polypropylen, muss bezüglich der eingesetzten Klebstofffilme ein Kompromiss zwischen den optimalen Eigenschaften zur Haftung auf der Aluminiumobertläche und der Polypropylenoberfläche gefunden werden. Für die Haftungsentwicklung eines Klebers muss somit ein Kompromiss zwischen der optimalen Formulierung für Aluminium und Polypropylen eingegangen werden. Optimale Klebstoffschichten erfordern daher oft teure Formulierungen. Gegebenenfalls müssen zur Erzielung einer optimalen Haftung zusätzliche Primer eingesetzt werden, die entweder separate Maschinendurchgänge oder zusätzliche Auftragsstationen benötigen.

Zur Herstellung mehrschichtiger fotografischer Filme und Papiere wird seit Jahrzehnten ein unter dem Begriff "Curtain Coating" oder "Vorhangguss" bekannt gewordenes Flüssigfilm-Beschichtungsverfahren eingesetzt. Bei diesem Beschichtungsverfahren werden gleichzeitig mehrere Schichten aus einer Schlitzdüse in einem frei fallenden Vorhang auf eine laufende Materialbahn aufgetragen.

Es ist auch schon vorgeschlagen worden, die Vorhanggusstechnologie zur Beschichtung von Papier und zur Herstellung von Kunststoffverbundmateriallerl einzusetzen.

In der WO-A-0154828 ist ein Verfahren zur Herstellung eines mehrschichtigen Verpackungslaminates mit wenigstens zwei übereinander liegenden Schichten offenbart, bei welchem Verfahren zwei oder mehr Schichten mittels Vorhangguss auf ein Substrat aus einem gegebenenfalls bereits beschichteten Papier, Karton oder Kunststofffilm flüssig aufgetragen und nachfolgend getrocknet werden. Die Flüssigfilm-Beschichtungen umfassen Klebstoffschichten, Barriereschichten, Zwischenschichten als Abstandshalter, Sauerstoff-Scavenger-Schichten und Heisssiegelschichten.

Aus der US-B-6 845 599 ist ein zur Vorhanggusstechnologie alternatives Flüssigfilm-Beschichtungsverfahren unter der Bezeichnung "Slide Coating", nachfolgend "Gleitbeschichtung" genannt, bekannt. Bei diesem Beschichtungsverfahren werden gleichzeitig mehrere Schichten aus einer Schlitzdüse von einer Düsengleitfläche direkt auf ein an der Ablaufkante der Düsengleitfläche vorbeigeführtes Substrat aufgetragen.

Ein Verfahren der eingangs gennanten Art ist aus US-A-5 565 252 bekannt.

Der Erfindung liegt die Aufgabe zugrunde, ein Verfahren der eingangs genannten Art zu schaffen, mit welchem unterschiedliche Substrate einfach und kostengünstig verklebt werden können.

Zur erfindungsgemässen Lösung der Aufgabe führt ein Verfahren mit den Merkmalen des Anspruchs 1.

Jede der Klebstoffschichten ist auf die Oberfläche des jeweils angrenzenden Substrats funktionell optimiert.

Unter dem Begriff "funktionell optimiert" wird verstanden, dass die zur Bildung der Klebstoffschichten verwendeten Klebstoffformullerungen einzeln jeweils so auf die chemischen und/oder physikalischen Eigenschaften der an die Klebstoffschichten angrenzenden Substrate angepasst sind, dass sich zwischen jedem Paar Substrat / angrenzende Klebstoffschicht eine optimale Haftung ergibt.

Mit dem erfindungsgemässen Verfahren können auf einfache Art zwei Substrate mit unterschiedlichen Oberflächeneigenschaften mit jeweils einem auf jedes Substrat bezüglich optimaler Haftung einzeln abgestimmten Klebstoff beschichtet werden.

Die spezifisch auf ein bestimmtes Substrat angepassten Klebstoffformullerungen sind oft kostspielige Produkte. Bevorzugt wird deshalb ein Flüssigfilm eingesetzt, der zwei Klebstoffschichten und eine zwischen den Klebstoffschichten angeordnete Zwischenschicht aufweist, wobei die Dicke der Klebstoffschichten geringer ist als die Dicke der Zwischenschicht. Die Dicke der Klebstoffschichten beträgt zweckmässigerweise etwa 1 bis 30 %, vorzugsweise 1 bis 10 %, der Dicke der Zwischenschicht.

Bevorzugt besteht die Zwischenschicht aus einem kostengünstigen Material, wie z. B. ein Klebstoff auf Urethanbasis, insbesondere aus einem Standard Urethan-Klebstoff, wie z.B aromatische oder aliphatische Isocyanate.

Die Klebstoffschichten können beispielsweise aus Klebstoffen auf Urethanbasis, beispielsweise Polyether-, Polyester oder Polybutadienpolyole, Acrylat- oder Epoxybasis oder aus Kombinationen der genannten Klebstoffe zusammengesetzt sein.

Die Schichten des Flüssigfilms können lösemittelbasiert, lösemittelfrei oder wasserbasiert sein. Lösemittelfreie Beschichtungsfluide werden bevorzugt, da bei diesen der übliche Trocknungsschritt entfällt.

Als Substrate können Kunststofffilme aus beispielsweise Polyethylenterephthalat (PET), Polyethylen (PP), Polypropylen (PP), Polyamid (PA), Metallfolien, wie z. B. Aluminiumfolien, gegebenenfalls mit einem Barrierematerial aus beispielsweise SiOₓ beschichtet, Papier oder eine Kombination aus wenigstens zwei der vorstehend genannten Materialien eingesetzt werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 den Verfahrensablauf bei der Verbindung von zwei Substraten mittels Vorhangguss im Querschnitt;
- Fig. 2 einen Querschnitt durch ein Detail von Fig. 1 nach deren Linie I-I;
- Fig. 3 einen Querschnitt durch ein Detail von Fig. 1 nach deren Linie II-II;
- Fig. 4 das zum Vorhangguss von Fig. 1 alternative Gleitbeschichtungsverfahren im Querschnitt.

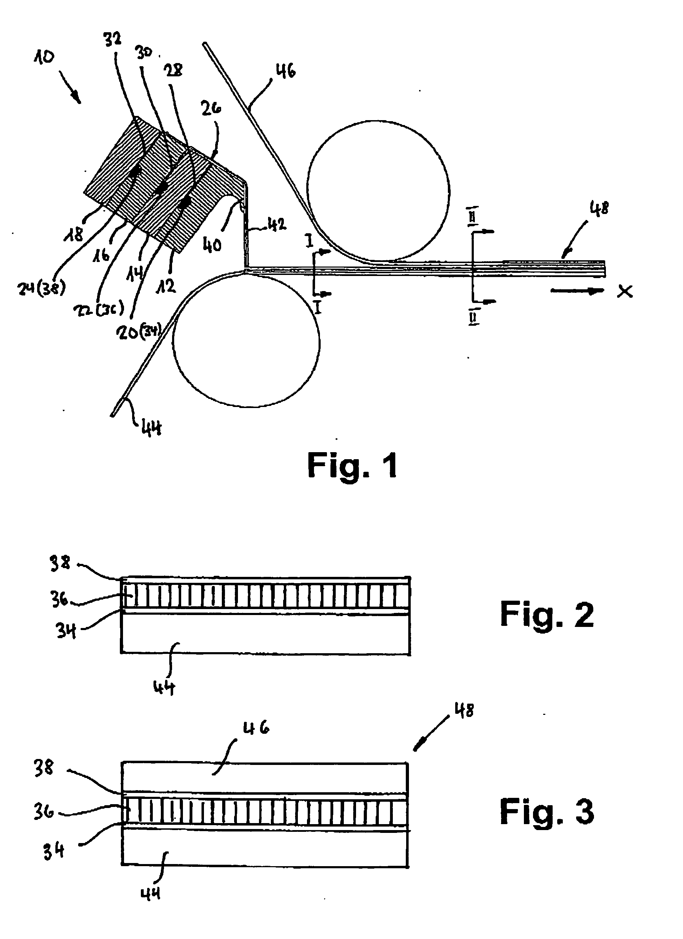

Eine in Fig. 1 gezeigte Düsenanordnung 10 einer nicht näher dargestellten Gleitflächen-Beschichtungsvorrichtung für eine Flüssigflm-Beschichtung mittels Vorhangguss weist vier einander anliegende Module 12, 14, 16, 18 auf. Die aneinandergereihten Module 12, 14, 16, 18 bilden insgesamt drei quer zu einer Bahnlaufrichtung x angeordnete Verteilkammem 20, 22, 24 mit je einem an einer Düsengleitfläche 26 endenden Austrittsschlitz 28, 30, 32. Die Verteilkammem 20, 22, 24 werden entsprechend der gewünschten Austrittsmenge an der Düsengleitfläche 26 separat und dosiert mit Beschichtungsfluiden 34 (Klebstoff), 36 (Zwischenschicht), 38 (Klebstoff) versorgt.

Die aus den Verteilkammern 20, 22, 24 über die Austrittsschlitze 28, 30, 32 an der Düsengleitfläche 26 austretenden und in Schichten übereinandergelegten Beschichtungsfluide 34, 36, 38 laufen als dreischichtiger Flüssigkeitsfilm über eine am Modul 12 angeordnete Ablaufkante 40 und bilden einen frei fallenden Vorhang 42.

Der aus den Beschichtungsfluiden 34, 36, 38 aufgebaute dreischichtige Vorhang 42 trifft im wesentlichen senkrecht auf eine sich in Laufrichtung x bewegende erste Substratbahn 44 und bildet auf deren Oberfläche die in Fig. 2 gezeigte fluide Beschichtung.

Der mit den Beschichtungsfluiden 34, 36, 38 beschichteten ersten Substratbahn 44 wird in Bandlaufrichtung x eine zweite Substratbahn 46 zugeführt und mit der beschichteten ersten Substratbahn 44 zu einem in Fig. 3 gezeigten Laminat 48 verklebt.

Mit dem in Fig. 1 dargestellten Verfahrensablauf kann z. B. ein Laminat aus einer Aluminiumfolie und einem PET-Film wie folgt gefertigt werden. Eine Aluminiumfolie wird mit einem dreischichtiger Flüssigkeitsfilm beschichtet, und die beschichtete Aluminiumfolie wird anschliessend mit einem PET-Film verklebt. Der dreischichtige Flüssigkeitsfilm besteht aus einer ersten, auf die Aluminiumoberfläche optimierten Klebstoffschicht auf Urethan-, Acrylat- oder Epoxybasis, einer mittleren Schicht aus einem Standard Urethan-Klebstoff und aus einer zweiten, auf die PET-Oberfiäche optimierten Klebstoffschicht auf Urethan-, Acrylat- oder Epoxybasis. Die Dicke der beiden aussenliegenden Klebstoffschichten beträgt etwa 10 % der Dicke der mittleren Schicht.

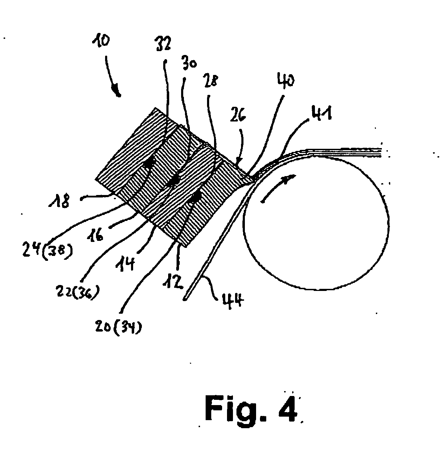

Fig. 4 zeigt eine Düsenanordnung 10 mit einem im wesentlichen gleichen Aufbau wie die Düsenanordnung von Fig. 1, wobei die Ablaufkante 40 zur Durchführung des Gleitbeschichtungsverfahrens angepasst ist. Der dreischichtige Flüssigkeitsfilm 41 gleitet hier von der Ablaufkante 40 direkt auf die an der Ablaufkante 40 vorbeigeführte Substratbahn 44.

## Patentansprüche

1. Verfahren zur Herstellung eines Laminates (48) aus zwei über eine Klebstoffschicht miteinander verbundenen folienförmigen Substraten (44, 46), wobei ein erstes Substrat (44) über eine Flüssigfillm-Beschichtung mit einem Klebstoff beschichtet und nachfolgend mit dem zweiten Substrat (46) verbunden wird,
**dadurch gekennzeichnet, dass**
die Flüssigfilm-Beschichtung mittels Vorhangguss oder Gleitbeschichtung mit einem mehrschichtigen, wenigstens zwei Klebstoffschichten (34, 38) umfassenden Flüssigfilm erfolgt, wobei jede der Klebstoffschichten (34, 38) auf die Oberfläche des angrenzenden Substrats (44, 46) funktionell optimiert ist, wobei die zur Bildung der Klebstoffschichten (34, 38) verwendeten Klebstoffformulierungen einzeln jeweils so an die chemischen und/oder physikalischen Eigenschaften der an die Klebstoffschichten (34, 38) angrenzenden Substrate (44, 46) angepasst sind, dass sich zwischen jedem Paar Substrat / angrenzende Klebstoffschicht (44 / 34; 38 / 46) eine optimale Haftung ergibt.

2. Verfahren nach Anspruch 1, **dadurch gekennzeichnet, dass** der Flüssigfilm zwei Klebstoffschichten (34, 38) und eine zwischen den Klebstoffschichten (34, 38) angeordnete Zwischenschicht (36) aufweist.

3. Verfahren nach Anspruch 2, **dadurch gekennzeichnet, dass** die Dicke der Klebstoffschichten (34, 38) geringer ist als die Dicke der Zwischenschicht (36).

4. Verfahren nach Anspruch 3, **dadurch gekennzeichnet, dass** die Dicke der Klebstoffschichten (34, 38) 1 bis 30 %, vorzugsweise 1 bis 10 %, der Dicke der Zwischenschicht (36) beträgt.

5. Verfahren nach einem der Ansprüche 1 bis 4, **dadurch gekennzeichnet, dass** die Klebstoffschichten (34, 38) aus Klebstoffen auf Urethanbasis, insbesondere Polyother-, Polyester- oder Polybutadienpolyole, Acrylat- oder Epoxybasls oder aus Kombinationen der genannten Klebstoffe zusammengesetzt sind.

6. Verfahren nach Anspruch 2, **dadurch gekennzeichnet, dass** die Zwischenschicht (36) aus einem Klebstoff auf Urethanbasis, insbesondere aus aromatischen oder aliphatischen Isocyanaten, besteht.

7. Verfahren nach einem der Ansprüche 1 bis 6, **dadurch gekennzeichnet, dass** die Schichten (34, 36, 38) des Flüssigfilms lösemittelbasiert, lösemittelfrei oder wasserbasiert sind.

8. Verfahren nach einem der Ansprüche 1 bis 7, **dadurch gekennzeichnet, dass** die Substrate (44, 46) Kunststofffilme, Metallfollen, Papier oder eine Kombination aus wenigstens zwei der vorstehend genannten Materialien sind.

## Claims

1. Process for producing a laminate (48) from two film-type substrates (44, 46) Interconnected via an adhesive layer, a first substrate (44) being coated with an adhesive by liquid film coating and subsequently being connected to the second substrate (46), **characterised in that** the liquid film coating is carried out by curtain coating or slide coating with a multi-layer liquid film comprising at least two adhesive layers (34, 36), each of the adhesive layers (34, 38) being functionally optimised to the surface of the adjacent substrate (44, 46), the adhesive formulations used to form the adhesive layers (34, 38) being individually adapted In each case to the chemical and/or physical properties of the substrates (44, 46) adjacent to the adhesive layers (34, 38) in such a way as to provide optimum adhesion between each substrate/adjacent adhesive layer pair (44/34; 38/46).

2. Process according to claim 1, **characterised in that** the liquid film comprises two adhesive layers (34, 38) and an intermediate layer (36) arranged between the adhesive layers (34, 38).

3. Process according to claim 2, **characterised in that** the thickness of the adhesive layers (34, 38) Is less than the thickness of the intermediate layer (36).

4. Process according to claim 3, **characterised in that** the thickness of the adhesive layers (34, 38) is 1 to 30 %, preferably 1 to 10 %, of the thickness of the intermediate layer (36).

5. Process according to any one of claims 1 to 4, **characterised in that** the adhesive layers (34, 38) are composed of urethane-based adhesives, in particular polyether polyols, polyester polyols or polybutadiene polyols, acrylate-based adhesives or epoxy-based adhesives, or of combinations of these adhesives.

6. Process according to claim 2, **characterised in that** the intermediate layer (36) consists of a urethane-based adhesive, in particular of aromatic or aliphatic isocyanates.

7. Process according to any one of claims 1 to 6, **characterised in that** the layers (34, 36, 38) of the liquid film are solvent-based, solvent-free or water-based.

8. Process according to any one of claims 1 to 7, **characterised in that** the substrates (44, 46) are plastics material films, metal foils, paper or a combination of at least two of said materials.

## Revendications

1. Procédé pour la préparation d'un stratifié (48) constitué de deux substrats (44, 46) en forme de feuille liés ensemble par l'intermédiaire d'une couche d'adhésif, un premier substrat (44) étant revêtu avec un adhésif par l'intermédiaire d'un revêtement de film liquide et étant ensuite lié avec le second substrat (46),
**caractérisé en ce que**
le revêtement de film liquide est réalisé à l'aide d'une coulée en rideau ou d'un revêtement glissant avec un film liquide multicouche comprenant au moins deux couches d'adhésif (34, 38), chacune des couches d'adhésif (34, 38) étant optimisée en fonction sur la surface du substrat adjacent (44, 46), les formulations d'adhésif utilisées pour la formation des couches d'adhésif (34, 38) étant individuellement à chaque fois adaptées aux caractéristiques chimiques et/ou physiques des substrats (44, 46) adjacents aux couches d'adhésif (34, 38) de telle sorte qu'est réalisée une adhérence optimale entre chaque paire substrat/couche d'adhésif adjacente (44/34 ; 38/46).

2. Procédé selon la revendication 1, **caractérisé en ce que** le film liquide présente deux couches d'adhésif (34, 38) et une couche intermédiaire (36) disposée entre les couches d'adhésif (34, 38).

3. Procédé selon la revendication 2, **caractérisé en ce que** l'épaisseur des couches d'adhésif (34, 38) est inférieure à l'épaisseur de la couche intermédiaire (36).

4. Procédé selon la revendication 3, **caractérisé en ce que** l'épaisseur des couches d'adhésif (34, 38) est de 1 à 30 %, de préférence de 1 à 10 % de l'épaisseur de la couche intermédiaire (36).

5. Procédé selon l'une quelconque des revendications 1 à 4, **caractérisé en ce que** les couches d'adhésif (34, 38) sont constituées d'adhésifs à base d'uréthane, en particulier de polyéther-, de polyester- ou de polybutadiènepolyols, à base d'acrylate ou d'époxy ou de combinaisons des adhésifs cités.

6. Procédé selon la revendication 2, **caractérisé en ce que** la couche intermédiaire (36) est constituée d'un adhésif à base d'uréthane, en particulier d'isocyanates aromatiques ou aliphatiques.

7. Procédé selon l'une quelconque des revendications 1 à 6, **caractérisé en ce que** les couches (34, 36, 38) du film liquide sont à base de solvant sont exemptes de solvant ou sont à base d'eau.

8. Procédé selon l'une quelconque des revendications 1 à 7, **caractérisé en ce que** les substrats (44, 46) sont des films de matière plastique, des feuilles métalliques, du papier ou une combinaison d'au moins deux des matériaux cités précédemment.
